# EUROPEAN PATENT SPECIFICATION

(11) **EP 3 574 737 B1**
(45) Date of publication and mention of the grant of the patent: **07.09.2022**
(21) Application number: 19167784.8
(22) Date of filing: 08.04.2019
(51) Int. Cl.: A01D 34/64, A01D 34/82, B62D 1/184, B62D 1/185, F16B 7/10

(54) **ADJUSTMENT SYSTEM FOR A STEERING ASSEMBLY**
EINSTELLSYSTEM FÜR EINE LENKEINHEIT
SYSTÈME DE RÉGLAGE D'UN ENSEMBLE DE DIRECTION

(30) Priority: 28.05.2018 SE 1850638
(43) Date of publication of application: 04.12.2019
(73) Proprietor: HUSQVARNA AB, 561 82 Huskvarna (SE)
(72) Inventor: NORDQUIST, Dennis, 55445 Jönköping (SE)
(74) Representative: Schröer, Gernot H.

(56) References cited:
- WO-A1-2013/002773
- DE-A1- 1 926 323
- DE-A1- 2 610 139
- US-A- 1 004 875
- US-A- 1 661 868
- US-A- 1 661 869
- US-A- 2 509 284
- US-A- 3 222 095

## Description

### Technical Field

The present disclosure relates to a steering assembly. The adjustment mechanism of the steering assembly is also disclosed.

### Background

Lawn care tasks are commonly performed using various tools and/or machines that are configured for the performance of corresponding specific tasks. Certain tasks, like grass cutting, are typically performed by lawn mowers. Lawn mowers themselves may have many different configurations to support the needs and budgets of consumers, such as walk-behind lawn mowers, riding lawn mowers, etc. Riding lawn mowers can sometimes also be configured with various functional accessories (e.g., trailers, tillers etc.) in addition to grass cutting components. Riding lawn mowers provide the convenience of a riding vehicle as well as a typically larger cutting deck as compared to a walk-behind mower.

Typically, such a mower is provided with a steering assembly for maneuvering the mower while operating. The steering assembly has an adjustable height to accommodate multiple users. To change the height of the steering assembly, the user may need to remove a cap using a tool, loosen a nut using another tool, and then loosen a screw using yet another tool. After adjusting height of the steering assembly, the nut and the screw need to be tightened again, and the cap needs to be put back on using the respective tools. Therefore, three different tools are required for changing height of the steering assembly which poses challenges like requirement of additional storage space for tools, inconvenience to users, etc.

A steering assembly with the features of the preamble of claim 1 is known from DE 2610139 A1.

Therefore, a steering assembly is needed which may allow the user to conveniently change the height of the steering assembly.

### Summary of the Disclosure

The steering assembly includes a steering tube. The adjustment system includes a steering rod movably located within the steering tube. The steering rod defines a groove extending along a length of the steering rod. The adjustment system includes a screw passing through a hole defined by the steering tube. The screw engages with the groove. The adjustment assembly includes a nut threadedly engaged to the screw and located within the steering tube. The adjustment assembly further includes a handle movably received on the screw. The handle selectively rotates the screw in a first rotational direction to a tightened position in which the screw engages with the groove to couple the steering tube with the steering rod. Further, the handle selectively rotates the screw in a second rotational direction to a loosened position in which the screw is disengaged from the groove to allow the steering tube to be movable with respect to the steering rod.

In another example embodiment, a steering assembly includes a steering tube having an inner surface and an outer surface. The steering tube defines a hole extending between the inner surface and the outer surface. The steering assembly has an adjustment system for the steering assembly. The adjustment system includes a steering rod movably located within the steering tube. The steering rod defines a groove extending along a length of the steering rod. The adjustment assembly includes a screw passing through the hole defined by the steering tube. The screw engages with at the groove. The adjustment assembly includes a nut threadedly engaged to the screw and located within the steering tube. The adjustment assembly includes a handle movably received on the screw. The handle selectively rotates the screw in a first rotational direction to a tightened position in which the screw engages with the groove to couple the steering tube with the steering rod. Further, the handle selectively rotates the screw in a second rotational direction to a loosened position in which the screw is disengaged from the groove to allow the steering tube to be movable with respect to the steering rod.

In still another example embodiment, a mower includes a chassis, and a cutting apparatus movably coupled to the chassis. The mower includes a steering assembly coupled to the chassis. The steering assembly includes a steering tube having an inner surface and an outer surface. The steering tube defines a hole extending between the inner surface and the outer surface. The steering assembly includes an adjustment system for the steering assembly. The adjustment system includes a steering rod movably located within the steering tube. The steering rod defines a groove extending along a length of the steering rod. The adjustment system includes a screw passing through the hole. The screw engages with the groove. The adjustment system includes a nut threadedly engaged to the screw and located within the steering tube. The adjustment system further includes a handle movably received on the screw. The handle selectively rotates the screw in a first rotational direction to a tightened position in which the screw engages with the groove to couple the steering tube with the steering rod. Further, the handle selectively rotates the screw in a second rotational direction to a loosened position in which the screw is disengaged from the groove to allow the steering tube to be movable with respect to the steering rod.

### Brief Description of Drawings

- FIG. 1: shows a perspective view of a mower, according to an example embodiment;
- FIG. 2: shows a steering assembly for the mower, according to an example embodiment;
- FIG. 3: shows a cross-sectional view of the steering assembly, according to an example embodiment;
- FIG. 4A: shows a cross-sectional view of an adjustment system for the steering assembly, according to an example embodiment;
- FIG. 4B: shows another cross-sectional view of the adjustment system for the steering assembly, according to an example embodiment;
- FIG. 5: shows an exploded view of the adjustment system of the steering assembly, according to an example embodiment;
- FIG. 6A: shows a cross-sectional view of the adjustment system for the steering assembly, according to an example embodiment;
- FIG. 6B: shows another cross-sectional view of the adjustment system for the steering assembly, according to an example embodiment; and
- FIG. 7: shows the adjustment system with a handle in two different orientations, according to an example embodiment.

### Detailed Description

Some example embodiments now will be described more fully hereinafter with reference to the accompanying drawings, in which some, but not all example embodiments are shown. The embodiments concerned should only be considered as examples. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other.

Some example embodiments may provide an improved steering assembly for a vehicle, such as a riding lawn mower by implementing structural changes in design of a steering assembly.

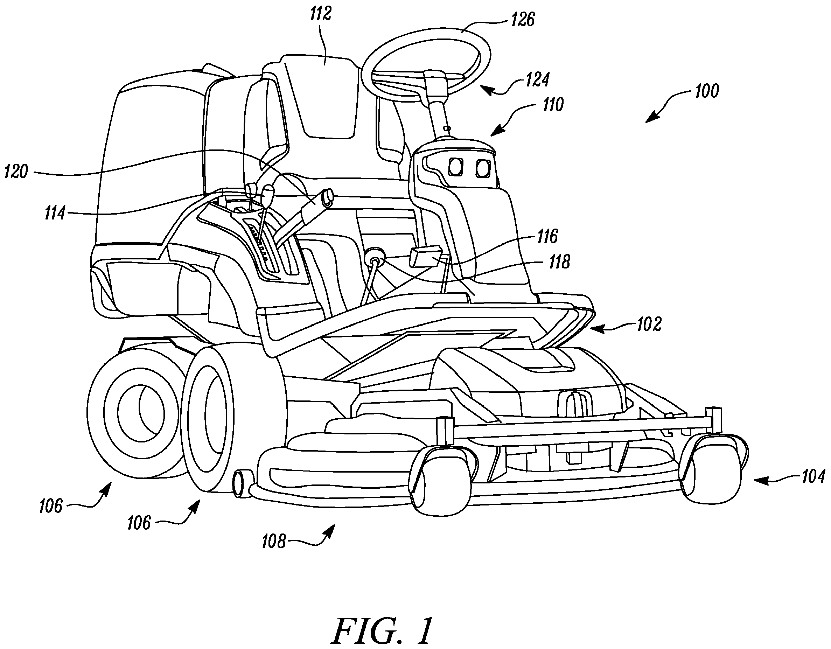

FIG. 1 illustrates a perspective view of a mower 100. The mower 100 is illustrated as a riding type mower. However, it should be contemplated that the mower 100 may be any other type of mower, or lawn care vehicle as well. The present disclosure is not limited by type of mower 100 in any manner. The mower 100 includes a chassis 102 supported over two pairs of wheels 106. The mower 100 may include fewer or more pairs of wheels 106 as per the application requirements.

The mower 100 includes a cutting apparatus 108 movably coupled to the chassis 102. The cutting apparatus 108 is located underneath the chassis 102. A pair of deck wheels 104 supports the cutting apparatus 108. The cutting apparatus 108 may include at least one cutting blade (not visible) mounted within the cutting apparatus 108 such that the mower 100 may perform a cutting operation. The cutting apparatus 108 may move between an operational position and a stowed position. The cutting blade may perform the cutting operation in the operational position and may be stored in the stowed position.

The mower 100 includes an operator platform 110 mounted on the chassis 102. The operator platform 110 has an operator seat 112 for an operator to sit upon while operating the mower 100. The operator platform 110 may also provide space for the operator to stand while operating the mower 100. The operator platform 110 further includes controls for the operator to control the mower 100. The controls include a gear shift lever 114, an accelerator pedal 116, a brake pedal 118, a parking brake lever 120, etc. The controls may include other such components as well which may be necessary to operate the mower 100.

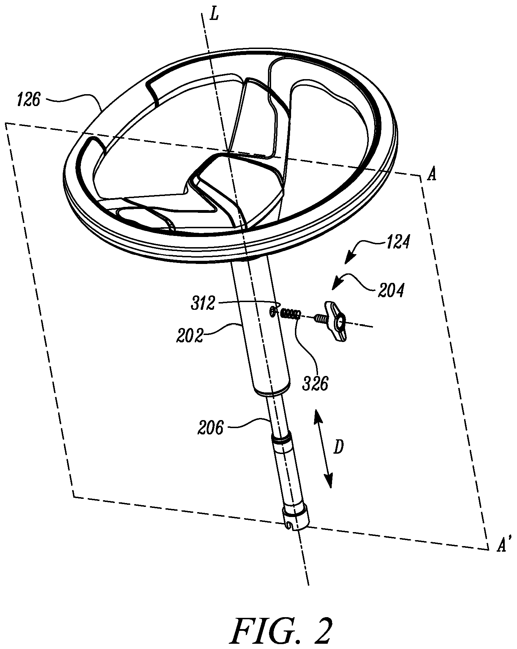

The mower 100 includes a steering assembly 124 coupled to the chassis 102. The steering assembly 124 includes a steering wheel 126 through which the operator may maneuver the mower 100 in a desired manner. FIG. 2 illustrates a perspective view of the steering assembly 124. The steering assembly 124 includes a steering tube 202 coupled to the steering wheel 126. The steering tube 202 is illustrated as having a hollow cylindrical shape. The steering assembly 124 further includes an adjustment system 204 for adjusting a height of the steering wheel 126 relative to the chassis 102. The adjustment system 204 includes a steering rod 206. The steering rod 206 is located within the steering tube 202 such that the steering rod 206 may move relative to the steering tube 202. The steering tube 202 defines a hole 312, which may allow mounting components of the adjustment system 204 on the steering tube 202. Other components of the adjustment system 204 will be explained in detail in the forthcoming description.

The steering rod 206 may be selectively slidable along a longitudinal direction 'D' inside the steering tube 202. The longitudinal direction 'D' may be parallel to a longitudinal axis 'L' defined by the steering rod 206. The steering rod 206 may be further coupled to powertrain components (not shown) so that steering input provided by the operator through the steering wheel 126 may get transferred to the wheels. However, any such components are not being discussed in detail in the context of the present disclosure as the present disclosure is not limited by any such components. A sectional plane A-A' passes through the steering tube 202 and the steering rod 206.

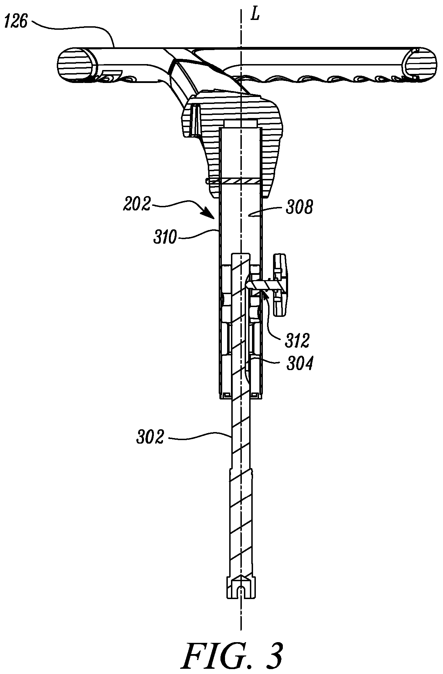

FIG. 3 shows further structural details of the adjustment system 204 through a cross-sectional view of the steering assembly 124 along the A-A' plane shown in FIG. 2. The steering rod 206 may have a generally solid structure. The steering rod 206 has an external surface 302 which defines a groove 304. The groove 304 extends vertically along a length of the steering rod 206. The groove 304 has a tapered shape such that a cross-sectional diameter of the groove 304 gets reduced as the groove 304 extends inside of the steering rod 206. The steering tube 202 has an inner surface 308 and an outer surface 310. The steering tube 202 defines the hole 312 extending between the inner surface 308 and the outer surface 310. The hole 312 may be provided at any suitable vertical location across a length of the steering tube 202.

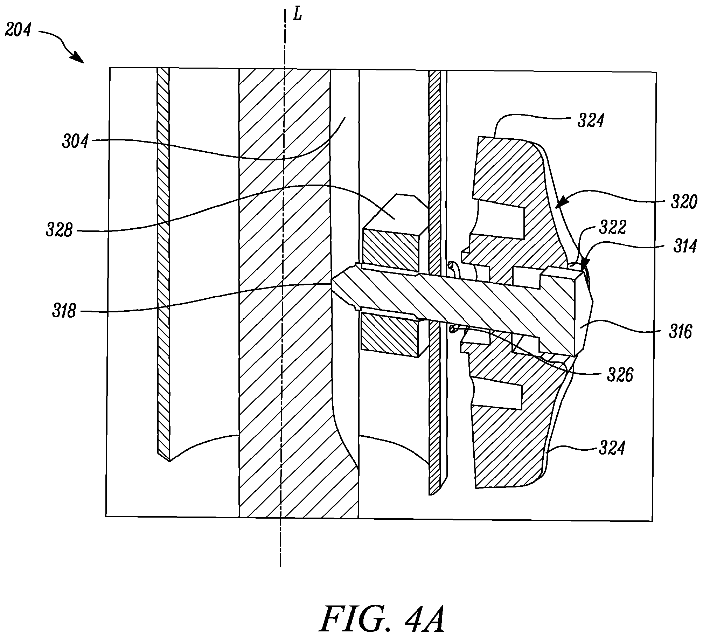

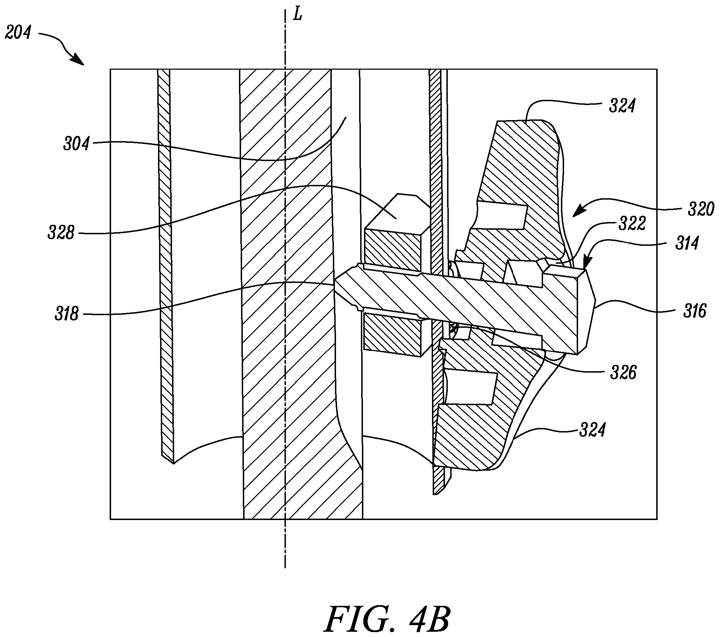

FIG. 4A and 4B show further structural details of the adjustment system. Referring to FIGS. 4A and 4B, the adjustment system 204 includes a screw 314 passing through the hole 312. The screw 314 has a head end 316 and a tapered end 318. The tapered end 318 of the screw 314 may engage with the groove 304 defined within the steering rod 206. The head end 316 of the screw 314 has a hexagonal profile. The adjustment system 204 includes a handle 320 movably received on the screw 314 at the head end 316. The handle 320 has a central portion 322 and two holding portions 324 coupled to the central portion 322 at diametrically opposite positions. More specifically, the central portion 322 of the handle 320 is a hollow portion which is received on the head end 316 of the screw 314. The operator may hold the handle 320 at the holding portions 324 and rotate the handle 320 relative to the screw 314.

The central portion 322 of the handle 320 may have a square or a hexagonal internal structure to engage with the hexagonal profile of the head end 316 of the screw 314. The handle 320 may move between an engaged state and a disengaged state relative to the head end 316 of the screw 314. FIG. 4A shows the handle 320 in the engaged state relative to the screw 314. The central portion 322 of the handle 320 is flush with the head end 316 of the screw 314 in the engaged state of the handle 320. The handle 320 is non-rotatably engaged with the head end 316 of the screw 314 in the engaged state. When the handle 320 is in the engaged state, rotation of the handle 320 causes rotation of the screw 314. Further, FIG. 4B shows the handle 320 in the disengaged state. The handle 320 may rotate freely relative to the head end 316 of the screw 314 in the disengaged state. When the handle 320 is in disengaged state, the screw 314 does not rotate with rotation of the handle 320.

Referring to FIGS. 4A and 4B, the adjustment system 204 includes a biasing member 326 provided between the steering tube 202 and the handle 320. The biasing member 326 may be a spring, an elastic member, or any other suitable component. In the illustrated embodiment, the biasing member 326 is shown as a coil spring. The biasing member 326 biases the handle 320 to stay in the engaged state. The adjustment system 204 further includes a nut 328 threadedly coupled to the screw 314. The nut 328 is coupled to the screw 314 towards the tapered end 318 of the screw 314. The screw 314 may have threads on an outer surface of the screw 314, and the nut 328 may have threads on an inner surface of the nut 328 so that the nut 328 and the screw 314 may be threadedly engaged to each other. The nut 328 is located within the steering tube 202.

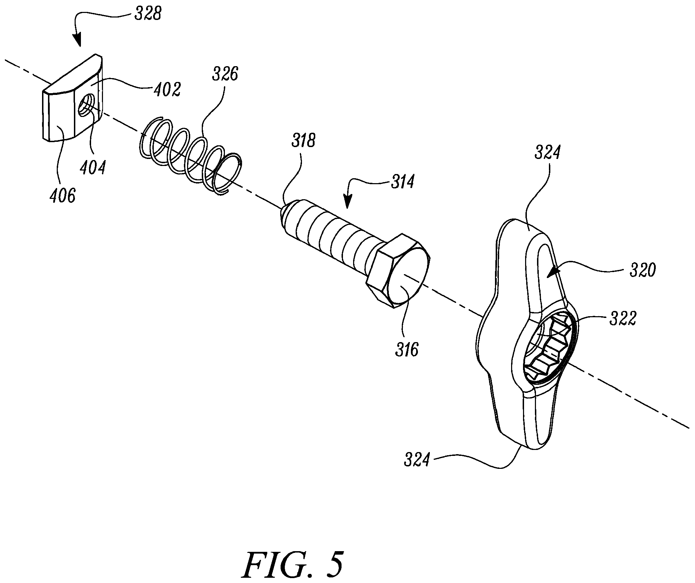

FIG. 5 shows further structural details of the adjustment system 204 showing the nut 328, biasing member 326, screw 314, and handle 320. The nut 328 has a structure such that the nut 328 can be easily accommodated inside the steering tube 202. The nut 328 has a straight surface 402 defining an opening 404 to receive the screw 314. The opening 404 includes threads on the defining surfaces to engage with corresponding threads on the screw 314. Further, the nut 328 includes a first tapered surface 406 and a second tapered surface (not shown) that extend from opposite sides of the straight surface 402. The first tapered surface 406 and the second tapered surface allow greater surface engagement area between the nut 328 and the inner surface 308 of the steering tube 202. When the handle 320 is in the engaged state, the nut 328 abuts with the inner surface 308 of the steering tube 202.

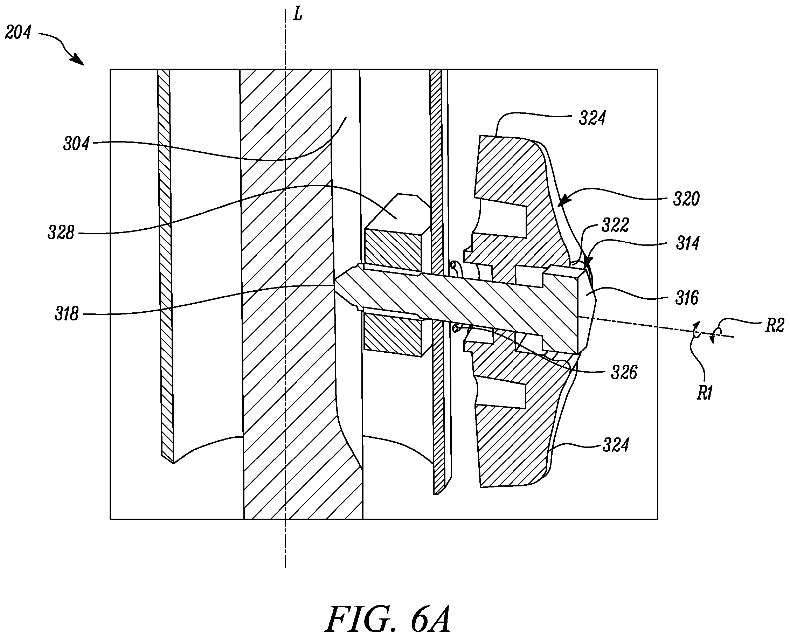

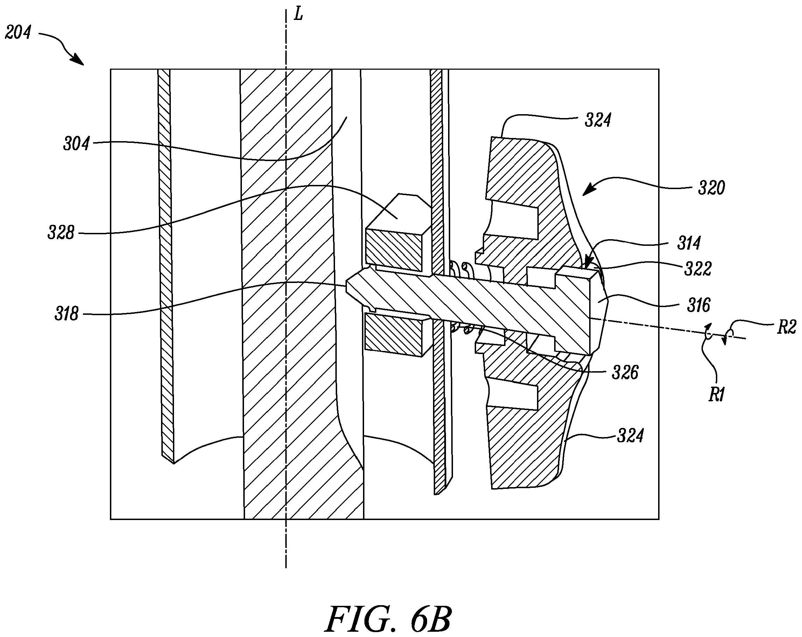

FIG. 6A and 6B show the adjustment system 204 with the screw 314 in a tightened position and a loosened position respectively. The adjustment system 204 allows the operator to change a height of the steering assembly 124 relative to the chassis 102 as per application requirements. The operator may rotate the handle 320 to tighten or loosen the screw 314. The handle 320 may selectively rotate the screw 314 in a first rotational direction R₁ to a tightened position (shown in FIG. 6A), and in a second rotational direction R₂ to a loosened position (shown in FIG. 6B).

As shown in FIG. 6A, while in operation, the handle 320 is typically in the tightened position such that the tapered end 318 of the screw 314 is engaged with the groove 304 of the steering rod 206, and the handle 320 is in the engaged state. For changing the height of the steering assembly 124, the operator may rotate the handle 320 in the second rotational direction R₂ to rotate the screw 314 to the loosened position. The screw 314 rotates with the handle 320, and the tapered end 318 of the screw 314 moves out of contact with the groove 304 as shown in FIG. 6B. After the screw 314 moves out of contact with the groove 304, the steering tube 202 may slide relative to the steering rod 206 along the longitudinal direction 'D'. Accordingly, the height of the steering assembly 124 may be varied by adjusting the screw 314 into and out of contact with various points within the groove 304 of the steering rod 206. The height of the steering assembly 124 may therefore be infinitely adjustable within a range defined by the groove 304.

The operator may choose any point within the groove 304 to engage with the screw 314. The operator slides the steering tube 202 along the longitudinal direction 'D' and moves the steering tube 202 at a suitable height. The operator may now rotate the handle 320 in the first rotational direction R₁ to rotate the screw 314 to the tightened position. The tapered end 318 of the screw 314 moves into contact with groove 304 and couples the steering tube 202 with the steering rod 206.

An additional support for the coupling between the steering tube 202 and the steering rod 206 is provided by the nut 328. In the tightened position of the screw 314, the straight surface 402 of the nut 328 abuts the inner surface 308 of the steering tube 202 which provides frictional resistance to relative movement between the steering tube 202 and the steering rod 206.

Although the handle 320 is illustrated in an orientation such that the two holding portions 324 are aligned with the steering tube 202 and the steering rod 206, it should be contemplated that there may be situations when the tightened state of the screw 314 may correspond to the handle 320 ending up in an angular orientation. In the angular orientation, the holding portions 324 may be inclined at an angle with respect to the longitudinal axis 'L' of the steering rod 206.

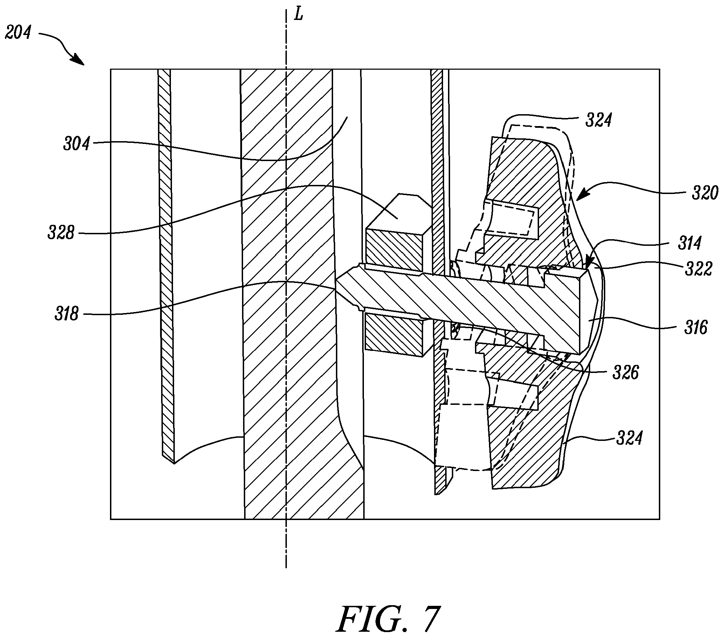

FIG. 7 shows such a configuration of the handle 320 in dashed lines. In such a scenario, the operator may push the handle 320 against the force of the biasing member 326 to the disengaged state (as shown in FIG. 4B). Now, as the handle 320 may rotate freely relative to the screw 314 in the disengaged state, the operator may rotate the handle 320 to align the holding portions 324 with the steering tube 202 and the steering rod 206. Specifically, the holding portions 324 may be oriented along the longitudinal axis 'L'. Such an aligned orientation allows more leg space for the operator as the handle 320 in the angular orientation may interfere with legs of the operator. When the operator releases the handle 320, the biasing member 326 biases the handle 320 to the engaged state (shown by solid lines).

Many modifications and other embodiments of the inventions set forth herein will come to mind to one skilled in the art to which these inventions pertain having the benefit of the teachings presented in the foregoing descriptions and the associated drawings. Therefore, it is to be understood that the invention is not to be limited to the specific embodiments disclosed and that modifications and other embodiments are intended to be included in the limit of the wording of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments in the limit of the wording of the appended claims.

## Claims

1. Steering assembly (124) having a steering tube (202) and comprising an adjustment system (204), the adjustment system (204) comprising:
a steering rod (206) movably disposed within the steering tube (202), wherein the steering rod (206) defines a groove (304) extending along a length of the steering rod (206);
a screw (314) passing through a hole (312) defined by the steering tube (202), wherein the screw (314) is adapted to engage with the groove (304) and wherein the screw (314) comprises a head end (316) and a tapered end (318);
a nut (328) threadedly engaged to the screw (314) and disposed within the steering tube (202); and
a handle (320) movably received on the screw (314), wherein the handle (320) is adapted to selectively rotate the screw (314) in:
a first rotational direction (R₁) to a tightened position in which the screw (314) engages with the groove (304) to couple the steering tube (202) with the steering rod (206); and
a second rotational direction (R₁) to a loosened position in which the screw (314) is disengaged from the groove (304) to allow the steering tube (202) to be movable with respect to the steering rod (206);
wherein the steering assembly (124) is **characterized in that** the handle (320) is adapted to be movable between an engaged state and a disengaged state relative to the head end (316) of the screw (314), wherein the handle (320) is adapted to be non-rotatably engaged to the head end (316) of the screw (314) in the engaged state of the handle (320) and wherein the handle (320) is adapted to rotate freely relative to the screw (314) in the disengaged state of the handle (320), wherein the adjustment system (204) further comprises a biasing member (326) disposed between the steering tube (202) and the handle (320), wherein the biasing member (326) is adapted to bias the handle (320) towards the engaged state.

2. The steering assembly (124) of claim 1, wherein the nut (328) abuts an inner surface (308) of the steering tube (202) in the tightened position of the screw (314).

3. The steering assembly (124) of claim 1 or 2, wherein the head end (316) of the screw (314) has a hexagonal profile; and/or
wherein the tapered end (318) of the screw (314) engages with the groove (304) in the tightened position.

4. The steering assembly (124) of any one of the preceding claims, wherein the steering tube (202) has an inner surface (308) and an outer surface (310), wherein the steering tube (202) defines a hole (312) extending between the inner surface (308) and the outer surface (310.

5. A mower (100) comprising:
a chassis (102);
a cutting apparatus (108) movably coupled to the chassis (102);
a steering assembly (124) coupled to the chassis (102), wherein the steering assembly (124) is a steering assembly according to any one of the claims 1 to 4.

## Patentansprüche

1. Eine Lenkanordnung (124) mit einem Lenkrohr (202) und einem Einstellsystem (204), wobei das Einstellsystem (204) Folgendes umfasst:
eine Lenkstange (206), die beweglich innerhalb des Lenkrohrs (202) angeordnet ist, wobei die Lenkstange (206) eine Nut (304) definiert, die sich entlang einer Länge der Lenkstange (206) erstreckt;
eine Schraube (314), die durch ein durch das Lenkrohr (202) definiertes Loch (312) hindurchgeht, wobei die Schraube (314) geeignet ist, in die Nut (304) einzugreifen, und wobei die Schraube (314) ein Kopfende (316) und ein verjüngtes Ende (318) aufweist;
eine Mutter (328), die mit der Schraube (314) in Gewindeeingriff steht und innerhalb des Lenkrohrs (202) angeordnet ist; und
einen Griff (320), der beweglich auf der Schraube (314) aufgenommen ist, wobei der Griff (320) geeignet ist, die Schraube (314) selektiv einzudrehen:
einer ersten Drehrichtung (R₁) in eine angezogene Position, in der die Schraube (314) in die Nut (304) eingreift, um das Lenkrohr (202) mit der Lenkstange (206) zu verbinden; und
eine zweite Drehrichtung (R₁) in eine gelöste Stellung, in der die Schraube (314) aus der Nut (304) gelöst ist, damit das Lenkrohr (202) in Bezug auf die Lenkstange (206) beweglich ist;
wobei die Lenkanordnung (124) **dadurch gekennzeichnet ist, dass** der Griff (320) so ausgelegt ist, dass er zwischen einem Eingriffszustand und einem Nichteingriffszustand relativ zu dem Kopfende (316) der Schraube (314) bewegbar ist, wobei der Griff (320) so ausgelegt ist, dass er in dem Eingriffszustand des Griffs (320) nicht drehbar mit dem Kopfende (316) der Schraube (314) in Eingriff steht, und wobei der Griff (320) so ausgelegt ist, dass er sich in dem Nichteingriffszustand des Griffs (320) frei relativ zu der Schraube (314) dreht, wobei das Einstellsystem (204) ferner ein Vorspannelement (326) umfasst, das zwischen dem Lenkrohr (202) und dem Griff (320) angeordnet ist, wobei das Vorspannelement (326) so ausgelegt ist, dass es den Griff (320) in Richtung des Eingriffszustandes vorspannt.

2. Lenkanordnung (124) nach Anspruch 1, wobei die Mutter (328) in der angezogenen Stellung der Schraube (314) an einer Innenfläche (308) des Lenkrohrs (202) anliegt.

3. Lenkanordnung (124) nach Anspruch 1 oder 2, wobei das Kopfende (316) der Schraube (314) ein Sechskantprofil aufweist; und/oder
wobei das verjüngte Ende (318) der Schraube (314) in der angezogenen Position in die Nut (304) eingreift.

4. Lenkanordnung (124) nach einem der vorhergehenden Ansprüche, wobei das Lenkrohr (202) eine Innenfläche (308) und eine Außenfläche (310) aufweist, wobei das Lenkrohr (202) ein Loch (312) definiert, das sich zwischen der Innenfläche (308) und der Außenfläche (310) erstreckt.

5. Ein Mäher (100), umfassend:
ein Fahrgestell (102);
eine Schneidvorrichtung (108), die beweglich mit dem Fahrgestell (102) verbunden ist;
eine mit dem Fahrgestell (102) verbundene Lenkanordnung (124), wobei die Lenkanordnung (124) eine Lenkanordnung nach einem der Ansprüche 1 bis 4 ist.

## Revendications

1. Ensemble de direction (124) ayant un tube de direction (202) et comprenant un système de réglage (204), le système de réglage (204) comprenant:
une barre de direction (206) disposée de manière mobile à l'intérieur du tube de direction (202), dans laquelle la barre de direction (206) définit une rainure (304) s'étendant le long d'une longueur de la barre de direction (206);
une vis (314) passant à travers un trou (312) défini par le tube de direction (202), dans laquelle la vis (314) est adaptée pour s'engager dans la rainure (304) et dans laquelle la vis (314) comprend une extrémité de tête (316) et une extrémité effilée (318);
un écrou (328) engagé par filetage sur la vis (314) et disposé à l'intérieur du tube de direction (202); et
une poignée (320) reçue de manière mobile sur la vis (314), dans laquelle la poignée (320) est adaptée pour faire tourner sélectivement la vis (314) dans:
une première direction de rotation (R₁ ) vers une position serrée dans laquelle la vis (314) s'engage dans la rainure (304) pour coupler le tube de direction (202) avec la barre de direction (206); et
un deuxième sens de rotation (R₁ ) à une position desserrée dans laquelle la vis (314) est désengagée de la rainure (304) pour permettre au tube de direction (202) d'être mobile par rapport à la barre de direction (206);
dans lequel l'ensemble de direction (124) est **caractérisé en ce que** la poignée (320) est adaptée pour être mobile entre un état engagé et un état désengagé par rapport à l'extrémité de tête (316) de la vis (314), dans lequel la poignée (320) est adaptée pour être engagée de manière non rotative sur l'extrémité de tête (316) de la vis (314) dans l'état engagé de la poignée (320) et dans lequel la poignée (320) est adaptée pour tourner librement par rapport à la vis (314) dans l'état désengagé de la poignée (320), dans lequel le système de réglage (204) comprend en outre un élément de sollicitation (326) disposé entre le tube de direction (202) et la poignée (320), dans lequel l'élément de sollicitation (326) est adapté pour solliciter la poignée (320) vers l'état engagé.

2. Ensemble de direction (124) de la revendication 1, dans lequel l'écrou (328) vient en butée contre une surface intérieure (308) du tube de direction (202) dans la position serrée de la vis (314).

3. Ensemble de direction (124) de la revendication 1 ou 2, dans lequel l'extrémité de tête (316) de la vis (314) a un profil hexagonal; et/ou dans lequel l'extrémité conique (318) de la vis (314) s'engage avec la rainure (304) dans la position serrée.

4. Ensemble de direction (124) de l'une quelconque des revendications précédentes, dans lequel le tube de direction (202) a une surface intérieure (308) et une surface extérieure (310), dans lequel le tube de direction (202) définit un trou (312) s'étendant entre la surface intérieure (308) et la surface extérieure (310).

5. Une faucheuse (100) comprenant:
un châssis (102);
un appareil de coupe (108) couplé de manière mobile au châssis (102);
un ensemble de direction (124) couplé au châssis (102), dans lequel l'ensemble de direction (124) est un ensemble de direction selon l'une quelconque des revendications 1 à 4.
